Europäisches Patentamt

(19) European Patent Office (11) Publication number: **0 281 338**
**B1**
Office européen des brevets

(12) **EUROPEAN PATENT SPECIFICATION**

(45) Date of publication of the patent specification: (51) Int. Cl.⁵: **F16H 9/18,** F16H 59/06
14.11.90

(21) Application number: **88301713.9**

(22) Date of filing: **26.02.88**

(54) A continuously variable speed-shifting device.

(30) Priority: **28.02.87 JP 45980/87**
**03.08.87 JP 194110/87**

(43) Date of publication of application:
**07.09.88 Bulletin 88/36**

(45) Publication of the grant of the patent:
**14.11.90 Bulletin 90/46**

(84) Designated Contracting States:
**DE FR GB IT SE**

(56) References cited:
**FR-A- 1 191 477**
**GB-A- 2 177 169**

**PATENT ABSTRACTS OF JAPAN, vol. 7,**
**no. 31 (M-192)[1176], 8th February 1983; &**
**JP-A-57 186 655 (MITSUBOSHI BELT K.K.) 17-11-82**
**PATENT ABSTRACTS OF JAPAN, vol. 10,**
**no. 29 (M-451)[2086], 5th February 1986; &**
**JP-A-60 184 759 (ISEKI NOKI K.K.) 20-09-1985**

(73) Proprietor: **BANDO CHEMICAL INDUSTRIES, LIMITED,**
**2-15, Meiwa-dori 3-chome, Hyogo-ku Kobe City Hyogo**
**Prefecture(JP)**

(72) Inventor: **Miyata, Hirofumi c/o Bando Chemical,**
**Industries, Ltd. 2-15, Meiwa-dori 3-chome, Hyogo-ku**
**Kobe-shi(JP)**
Inventor: **Kuchisubo, Katsushiro c/o Bando Chemical,**
**Industries, Ltd. 2-15, Meiwa-dori 3-chome, Hyogo-ku**
**Kobe-shi(JP)**
Inventor: **Sakamoto, Chikara c/o Bando Chemical,**
**Industries, Ltd. 2-15, Meiwa-dori 3-chome, Hyogo-ku**
**Kobe-shi(JP)**

(74) Representative: **Brooke-Smith, Fred et al, STEVENS,**
**HEWLETT & PERKINS 5 Quality Court Chancery Lane,**
**London WC2A 1HZ(GB)**

## Description

This invention relates to speed-shifting devices including variable speed pulleys to change the transmission ratio of a pair of transmission shafts by varying the effective radii of the pulleys of a belt drive. Devices of this kind are disclosed in JP-A-28038/72, JP-UM-A-196849/82, JP-UM-A-198451/82 and JPUM-A-14344/85.

In agricultural implements and the like conventionally used were many belt transmission type speed-shifting devices utilizing a belt drive for transmitting the power of an engine to a driven wheel or an operating device changing speed. As a belt transmission type speed-shifting device utilizing belt drive, a variable speed type device as defined in the first part of claim 1 is well known, for example, comprising a pair of parallel transmission shafts placed, variable speed pulleys composed of fixed sideplates solidly rotatably and axially non-slidably mounted on the respective transmission shafts and movable sideplates solidly rotatably and axially slidably mounted on the respective transmission shafts forming a V-shaped groove with the fixed sideplates, and a belt member engaged in the V-shaped grooves between the sideplates, wherein the transmission ratio between the transmission shafts is adjusted by changing the effective radius of the pulleys by moving axially the movable sideplates of the pulleys towards and away from the fixed sideplates and wherein a belt tension roller is arranged between said pulleys. FR-A 1 191 477 discloses such a device and forms the starting point of claim 1 of the claims hereof.

In such a speed-shifting device of variable speed pulley type, generally, a variable speed pulley on one of the transmission shafts is a driving pulley axially moved by a driving mechanism utilizing, for example, hydraulic equipment or a cam mechanism to change the effective radius of the driving pulley, and a variable speed pulley on the other transmission shaft is a driven pulley, the effective radius thereof being adjusted in dependence on a movement of the belt member by a change of the effective radius of the driving pulley under a bias of a spring urging the movable sideplate towards the fixed sideplate. However, there occur various problems as described below resulting from this arrangement. Thus:

(1) Since the tension of the belt member engaged on the pulleys is substantially given by the spring the force of the spring has to be high in order to ensure the power delivery between the transmission shafts. Since the high force spring is expensive, there is the problem of an increase of the total cost. In addition, when assembling a speed-shifting device, mounting the spring therein is not quickly done.

(2) Also, since the speed shifting process is such that when the effective radius of said driving pulley is changed by a movement of the movable sideplate the belt member moves in accordance therewith, the change of the effective radius between the driven pulley is varied and the transmission ratio between the transmission shafts varies thereafter, a certain period of time is required for shifting the speed. In particular, when the transmission ratio is shifted from low speed mode to high speed mode, high handling force is required to move the movable sideplate of the driven pulley from the fixed sideplate against the bias of the spring, because it is hard to shift the transmission ratio between both transmission shafts quickly and smoothly with a small handling force.

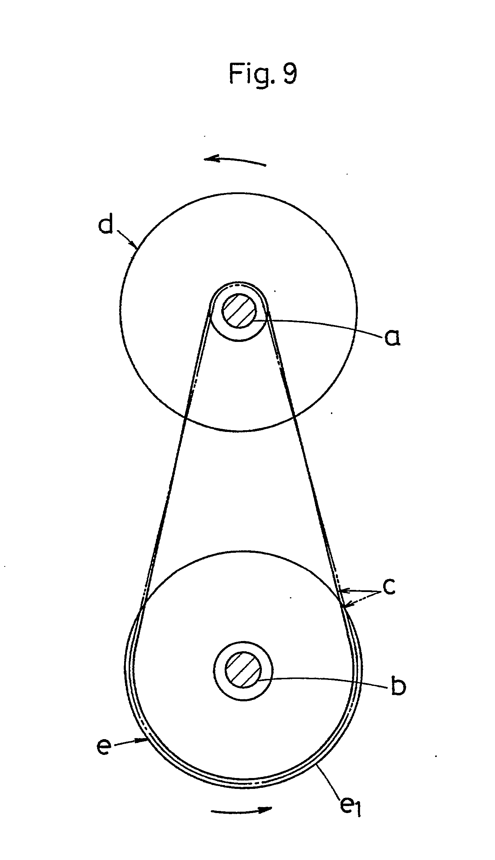

(3) Moreover, as shown in Fig. 9, when the driving mode changes from the unloaded mode, in which no driving power is transmitted between the transmission shafts a and b into the loaded mode in which driving power is transmitted, the pitch line of the belt member c located at the position shown as a full line in this figure in the unloaded mode of the driven pulley d moves to the middle position thereof shown as a broken line by an inner thrust of the belt member c. Nevertheless, in the driven pulley e its movable sideplate el is urged by the spring and its pitch line therefore moves radially outward, stretching the whole belt member c and decreasing the effective radius by the inward thrust on the belt member c in said driving pulley d, resulting in a certain decrease of rotational speed at the output transmission shaft b.

The object of this invention is to reduce the force of the spring for applying tension to the belt member, to smooth the speed shifting operation, and to prevent decrease of rotational speed of the driven shaft by the elongation of the belt member during the shifting process of the driving mode from unloaded to loaded by providing a means for moving synchronously the movable sideplates of both pulleys and by applying tension to the belt member by means other than the biasing of the movable sideplate towards the fixed sideplate of the driven pulley.

According to this invention as specified in claim 1 there is provided a speed-shifting device including a pair of parallel transmission shafts, a driving pulley and a driven pulley respectively mounted on said shafts each of which pulleys comprises a fixed sideplate secured to the shaft and a movable sideplate mounted for rotation with and axial sliding movement relative to the shaft, said fixed and movable sideplates on each shaft forming a V-shaped groove between them, a belt member extending between said driving and driven pulleys and engaging in said V-shaped grooves thereof, whereby the transmission ratio between transmission shafts can be changed by varying the effective radius of the engagement of each said pulley with said belt member by moving each movable sideplate axially towards and away from the facing fixed sideplate, a speed-shifting mechanism adapted to vary the transmission ratio between said transmission shafts by operating said movable sideplates of said driving and driven pulleys respectively, so as to move said movable sideplate away from said fixed sideplate on one transmission shaft when said movable sideplate on the other transmission shaft is moved towards the fixed sideplate, the movements of said movable side-plates being synchronized with each other a belt tension roller is arranged between said driving and said driven pulley, characterized in that the speed-shifting mechanism comprises a first cam mechanism adapted to move axially said movable sideplate of said driving pulley towards and away from said fixed sideplate, a second cam mechanism adapted to move axially said movable sideplate of said driven pulley towards and away from said fixed sideplate, and a connecting mechanism connecting said first cam mechanism with said second cam mechanism, adapted for inversely synchronizing said cam mechanisms so that when said movable sideplate of one pulley moves axially to said fixed sideplate the movable sideplate of the other pulley simultaneously moves axially from said fixed sideplate whereby said tension roller as bias mechanism disposed between said driving pulley and said driven pulley is arranged for engagement with a slack part of said belt member to increase the tension of the belt member and a spring is provided for biasing said tension roller towards said slack part of the belt member.

Each cam mechanism may be composed of a driving cam and a driven cam in contact therewith. Preferably, however, a cam roller replaces either the driving cam or the driven cam in order to reduce the handling force by the decrease of the frictional resistance when shifting the speed.

The bias mechanism is preferably put in substantially a middle position between the pulleys where the radial movement of the belt member is least during shifts of the transmission ratio between the transmission shafts, so that an appropriate tension to the belt member is always given during shifting speed.

The bias mechanism may be put at the position offset to one side of the middle position between the transmission shafts. For example, the bias mechanism may be put at the position offset towards the transmission shaft of the driving pulley in order to increase the tension given to the belt member in the low speed mode and to decrease it in the high speed mode. Conversely, the bias mechanism may be put in a position offset towards the transmission shaft of the driven pulley in order to increase the tension given to the belt member in the high speed mode and to decrease the tension in the low speed mode. When the condition using the speed-shifting device or the transmission ratio of high frequency is changed, the bias mechanism is arranged for adjusting quickly in accordance with the change of the condition or the like by moving the bias mechanism to the optimum position for the change.

The bias mechanism may be arranged to be movable to reduce the tension of said belt member and serve as a clutch mechanism for interrupting the power transmission between said transmission shafts by reduction of the tension of said belt member in order to interrupt the power transmission between the transmission shafts at any transmission ratio and to recommence transmission of power with the exact transmission ratio when interrupted. For example, the bias mechanism may be provided with a pivot arm having said tension roller mounted at the end thereof for engagement with the slack part of the belt member, said arm being pivotable to move the tension roller into and out of engagement with said slack part of the belt.

The accompanying drawings show some embodiments of this invention by way of example.

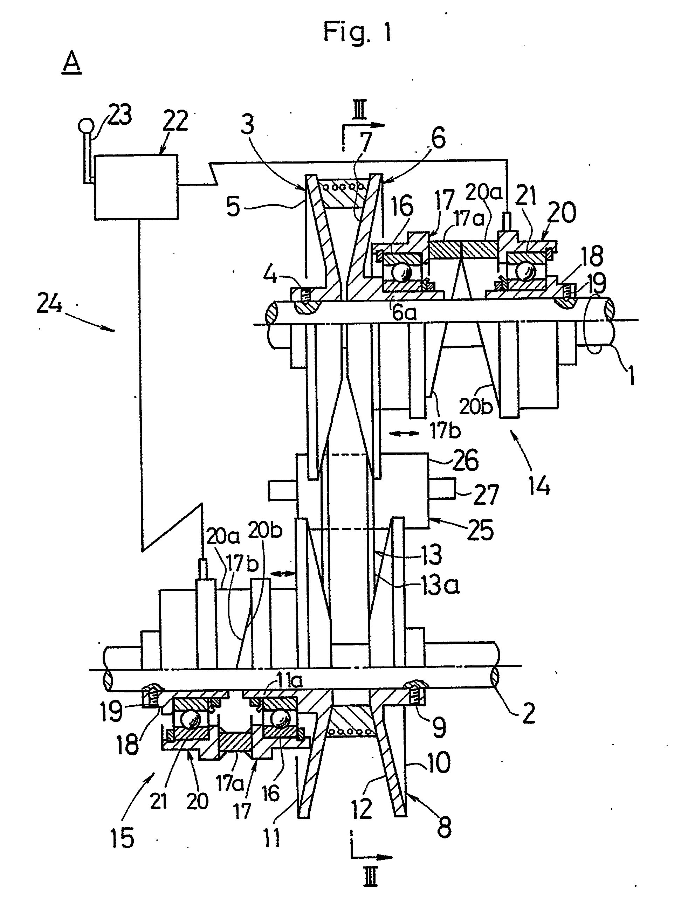

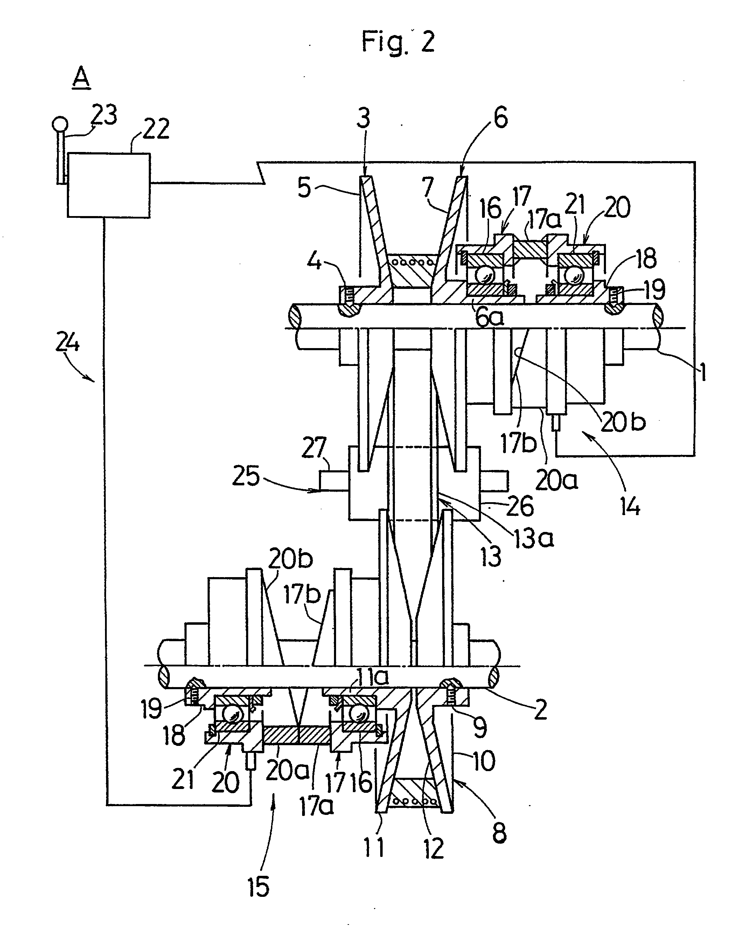

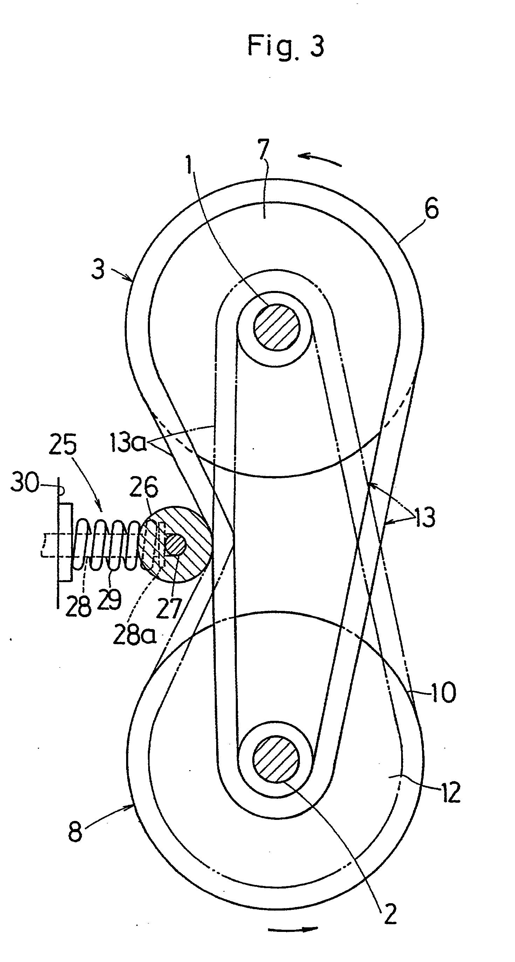

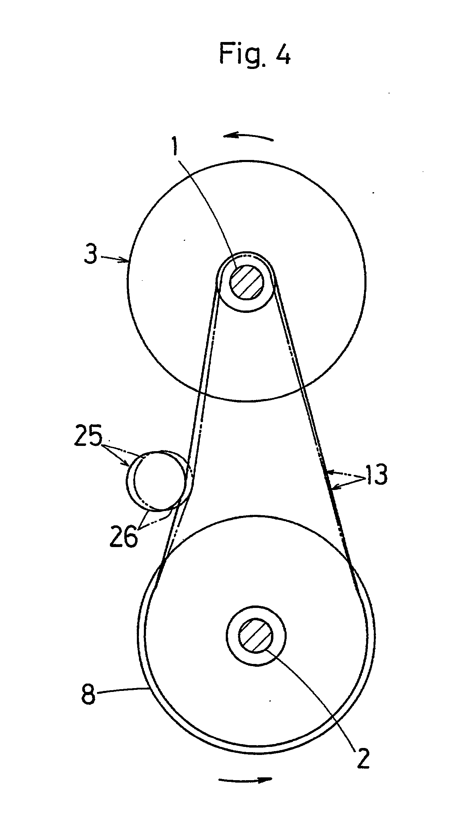

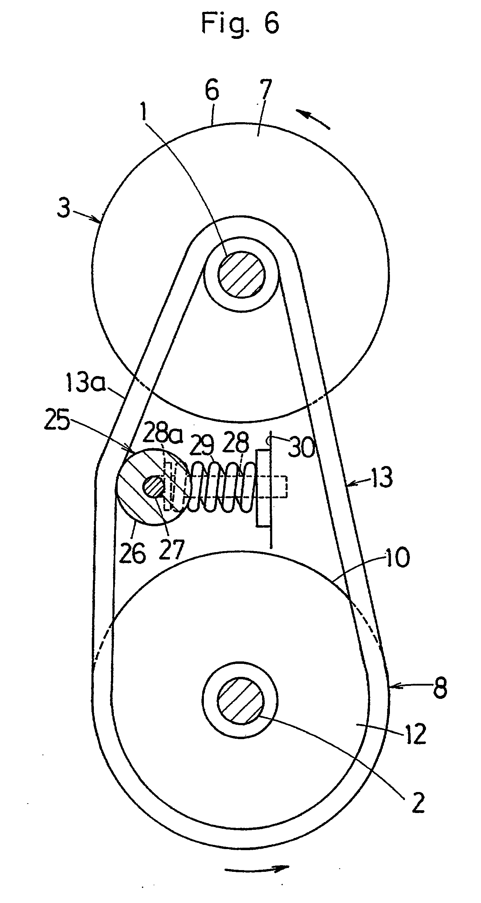

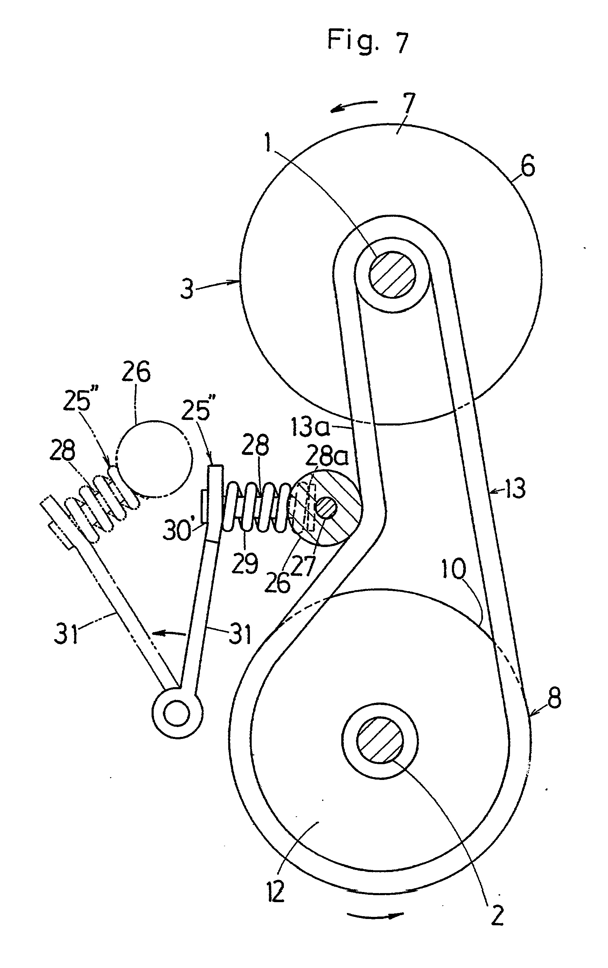

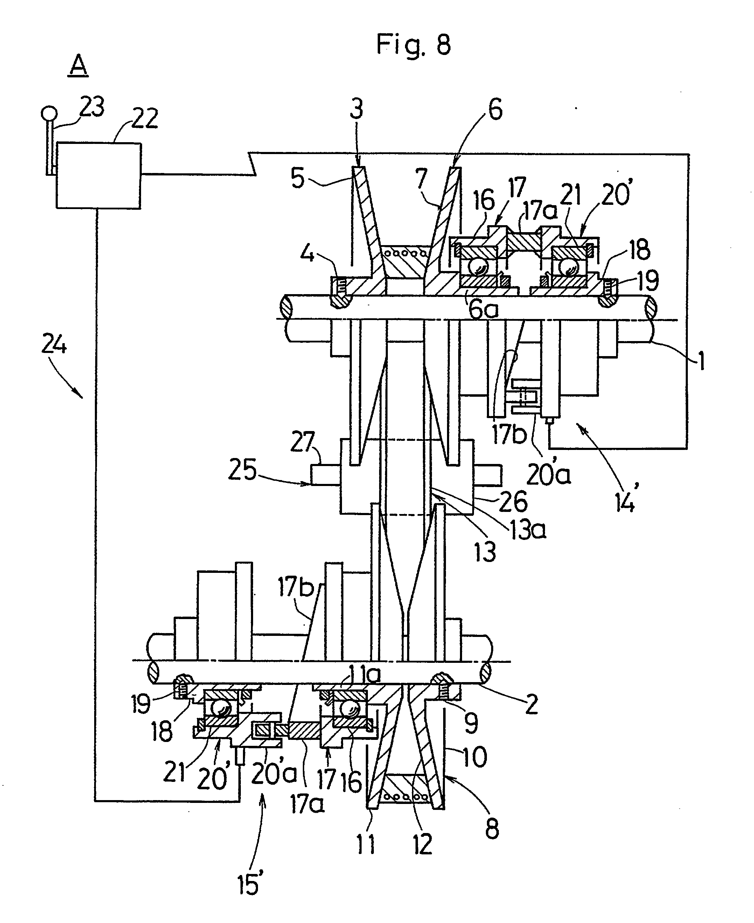

In the drawings, Fig.1 is an elevation partly in section of a speed-shifting device according to the invention in the high speed mode, Fig.2 is an elevation partly in section of the speed-shifting device in the low speed mode, Fig.3 is a cross-sectional view from III -III line in Fig.1, Fig.4 is a schematic sectional view showing a movement of a pitch line of the belt member while the driving mode changes from unload to load, Fig.7 is a schematic sectional view showing several examples of the urging position of the bias mechanism, Fig.6 is a schematic sectional view showing the embodiment having a bias mechanism mounted inside of the pitch line, Fig.7 is a schematic sectional view showing the embodiment where a bias mechanism is also served as a clutch mechanism, Fig.8 is an elevation partly in section showing another embodiment of a speed-shifting device, and Fig.9 is a schematic sectional view showing the movement of a pitch line in a conventional device.

Referring to the drawings Fig.l and Fig.2 show a pulley type speed-shifting device (A) wherein 1 is an input shaft and 2 is an output shaft. These input and output shafts 1 and 2 are placed parallel to each other. A driving pulley 3 mounted on said input shaft 1. This driving pulley 3 is composed of a flange shaped fixed sideplate solidly rotatably and axially non-slidably mounted on the input shaft 1 by a screw 4 and a flange shaped movable sideplate 6 axially slidably and solidly rotatably mounted on a spline on the input shaft 1 at a boss part 6a so as to face to said fixed sideplate 5. A V-shaped belt groove 7 is formed between the sideplates 5 and 6.

On the other part, a driven pulley 8 is mounted on the output shaft 2. This driven pulley 8 is arranged to be the same as the driving pulley 3, being composed of a flange shaped fixed sideplate 10 solidly rotatably and axially non-slidably mounted on the output shaft 2 by a screw 9 and a flange shaped movable sideplate 11 axially slidably and solidly rotatably mounted on a spline on the output shaft 2 at a boss part lla soa s to face to the fixed sideplate 10 and in the opposite direction to the movable sideplate 6 on the input shaft 1. A V-shaped groove 12 is also formed between both these sideplates 10 and 11. A V-belt 13 as a belt member is trained between both pulleys 7 and 8 engaging the two V-shaped grooves 7 and 12 thereof. An effective radius of the engagement of each pulley 3 and 8 with the V-belt 13 is adjusted by moving axially each movable sideplate 6 and 11 of both pulleys 3 and 8 to and from the fixed sideplates 5 and 10. When the movable sideplate 6 of the driving pulley 3 is moved towards the fixed sideplate 5 and the movable sideplate 11 of the driven pulley 8 is moved from the fixed sideplate 10, the effective radius of the driven pulley 8 is decreased. As a result, the transmission ratio of the input shaft 1 to output shaft 2 is increased. Conversely, when the movable sideplate 6 of the driving pulley 3 is moved from the fixed sideplate 5 and the movable sideplate 11 of the driven pulley 8 is moved towards the fixed sideplate 10, the effective radius of the driving pulley 3 is decreased and the effective radius of the driven pulley 8 is increased.

As a result, the transmission ratio of the input shaft 1 to output shaft 2 is decreased.

On the input shaft 1 and the output shaft 2 cam mechanisms 14 and 15, are also mounted coaxially to both pulleys 3 and 8, adapted to move axially each movable sideplate 6 and 11 to and from each fixed sideplate 5 and 10. Since the cam mechanisms 14 and 15 are the same, only cam mechanism 14 shaft 1 is explained below. The same reference numerals are used in cam mechanism 15.

Cam mechanism 14 comprises a cylindrical driven cam 17 solidly rotatably and axially non-slidably mounted on an outer race of a ball bearing 16 whose inner race is mounted on a boss part 6a of the movable sideplate 6. On the input shaft 1, having an opposite arrangement to the fixed sideplate 5 with the movable sideplate 6, a cylindrical sleeve 18 is mounted solidly rotatably and axially non-slidably with a screw 19. A cylindrical driving cam 20 is mounted rotatably and axially nonslidably on an outer race of a ball bearing 21 whose inner race is mounted on said sleeve 18.

Abovementioned driving and driven cams 20 and 17 are provided with cam parts 21a and 17a projecting to each other. These cam parts 20a and 17a are formed nearly the same as when a cylinder is cut diagonally. At the ends of each cam part 20a and 17a inclined cam faces 20b and 17b are formed contacting in cam engagement with each other, and is arranged so that on rotation of the driving cam 20 around the input shaft 1 the driven cam 17 is moved with the movable sideplate 6 of the driving pulley 3 to the fixed sideplate 5 axially to the input shaft 1 increasing the effective radius of the driving pulley 3 with the V-belt.

In cam mechanisms 14 and 15 both driving cams 20 are connected to a shift lever 23 by a connecting mechanism 22 including linkages, wires or the like to rotate them in accordance with the shift lever 23. Namely, a speed-shifting mechanism 24 is so arranged as to vary the transmission ratio between the shafts 1 and 2 by operating movable sideplates 6 and 11 of the pulleys 3 and 8 so that when the movable sideplates 6 (or 11) is moved toward the confronting fixed sideplate 5 (or 10), the other movable sideplate 11 (or 6) is moved away from the fixed sideplate 10 (or 5).

Moreover, between both pulleys 3 and 8 provided is a bias mechanism 25 adapted to bias a slack part 13a of the V-belt 13 (the part moving from the driving pulley to the driven pulley) from its outside for increasing the tension of the V-belt 13. This bias mechanism 25, as shown in Fig.3, comprises a cylindrical tension roller 26 engaging the outer circumferential surface (back side) of the V-belt in its slack part 13a, a supporting shaft 27 placed parallel to the shafts 1 and 2 axially rotatably supporting the tension roller 26, pair of rods 28 (only one of them is shown) fixed to the ends of the supporting shaft 27 movably supporting the tension roller 26. Springs 29 are mounted on rods 28 and are compressed between spring holders 28a and a support member 30 so as to bias the roller 26 and the supporting shaft 27 to increase the tension of the Vbelt 13. Thus the bias mechanism 25 is arranged so that the tension is created in the V-belt 13 by urging the tension roller 26 against the outer circumferential surface of the V-belt 13 with the force of the springs 29. Abovementioned tension roller 26 is axially long enough to keep contact with the outer circumferential surface of the V-belt 13 as it shifts parallel to shafts 1 and 2.

The operation of the speed-shifting device will now be described.

The movable sideplates 6 and 11 of both pulleys 3 and 8 and the sleeves 18 and 18 are rotated solidly with both shafts 1 and 2. Each driven cam 17 on the boss parts 6a and 11a of the movable sideplates 6 and 11 and the driving cams 20 on the sleeves 18 is suspended without rotating with shafts 1 and 2.

For example, when the transmission ratio of the input shaft 1 to the output shaft 2 is to be increased to change into the high speed mode from this state, the position of the shifting lever 23 in the speed-shifting mechanism 24 is shifted to the high speed position. Following this shift of lever 23, as shown in Fig.I and Fig.3, the driving cam 20 of the cam mechanism 14 on the input shaft 1 is turned around the input shaft 1 in one direction (for example, clockwise). When by this turn of the driving cam 20 the driven cam 17, contacting at the ends of the inclined cam faces 20b and 17b of each cam part 20a and 17a is forced to move from the driving cam 20 (to the left direction in the figure) on the input shaft 1, the movable sideplate 6 of the driving pulley 3 connected solidly movably with this driving am 17 via the vall bearing 16 is moved in the same direction to approach the fixed sideplate 5. In result, the width of the belt groove 7 of the driving pulley 3 is decreased, resulting in the increase of effective radius thereof with the V-belt 13. Also, inversely synchronized with the movement of the driving pulley 3, the driving cam 20 in the cam mechanism 15 on the output shaft 2 is turned around the output shaft 2 in one direction (for example, clockwise) by the shifting operation with the shifting lever 23. When by this turn of the driving cam 20 the driven cam 17 is released from the bias and urged by the tension of th Vbelt to move on the output shaft 2 in the direction to approach the driving cam 20 (to the left direction in the figure), the movable sideplate 11 of the driving pulley 8 is moved in the same direction to remove from the fixed sideplate in accordance with the movement of the driven cam 17, resulting that the effective radius of the driving pulley 3 with the V-belt 13 is decreased. As a whole, the effective radius of the driving pulley 3 with the V-belt 13 is shifted to be larger than that of 5 the driven pulley 8, and rotation of the input shaft 1 is transmitted to the output shaft 2 with increased speed.

On the other hand, when the transmission ratio between shafts 1 and 2 is to be lowered to change into the low speed mode, the position of abovementioned shifting lever 23 is shifted to the low speed position. Following the shifting operation with the shifting lever 23, as shown in Fig.2, the driven cam 20 in the cam mechanism 14 on the input shaft 1 is turned around the input shaft 1 in the other direction (counterclockwise). When by this turn of the driving cam 20 the driven cam 17 is released from the bias and urged by the tension of the V-belt 13 to move the driven cam 17 on the input shaft 1 in the direction to approach the driving cam 20 (to the right in the figure), the movable sideplate 6 of the driving pulley 3 is moved to the fixed sideplate 5 in the same direction, resulting in the decrease of the effective radius thereof with the V-belt 13. Also, on the output shaft 2, the driving cam 20 in the cam mechanism 15 is turned around the output shaft 2 in the other direction (counterclockwise). When by this turn of the driving cam 20 the driven cam 17 is urged to remove on the output shaft 2 from the driving cam 20 (to the right direction in the figure), the movable sideplate 11 of the driven pulley 8 is moved in the same direction to approach the fixed sideplate, resulting in the increase of the effective radius of the driven pulley 8 with the V-belt 13. As a whole, the effective radius of the driving pulley 3 is shifted to be smaller than that of the driven pulley 8 and rotation of the input shaft 1 is transmitted to the output shaft 2 with decreased speed.

Abovementioned outer circumferential surface of the slack part 13a of the V-belt 13 is biased to inside by the tension roller 26 of the bias mechanism 25 put between both pulleys 3 and 8. A predetermined tension is given to the V-belt 13 with the bias of the roller 26.

In this case. therefore, since the V-belt 13 is given the tension by urging on the outer circumferential surface of the slack Rart 13a of the V-belt 13 with the roller 26 of the bias mechanism 25, the force of each spring 29 for giving the tension to the V-belt 13 can be reduced, the cost can be lowered, and it can be easy to set up the springs 29 and total assembling workability can be improved.

Furthermore, since the movable sideplates 6 and 11 of both pulleys are mechanically driven to move axially by the speed-shifting mechanism 24, such a high handling force as in the conventional device for moving the movable sideplate 11 against the bias of the spring is not needed when shifting speed. In addition, the action of shifting speed becomes quick because of the synchronous movement of the movable sideplates 6 and 11 of both pulleys 3 and 8, therefore the speed shifting operation between shafts 1 and 2 be done smoothly with little handling force. For example, in our test result, to transmit the power of 7 HP between both shafts, about 100Kg/f of the biais force (axial force) is required by springs in the case of conventional device, but it only required about 10Kg/f in the case of this invention. The force of the spring can be reduced to be about one-tenth of that of the conventional device.

Moreover, in the conventional device, when the movement from the unload mode, in which the power is not transmitted between shafts 1 and 2, to the load mode, in which the power is transmitted, the pitch line of the V-belt 13 is moved radially inward by the inward thrust of the V-belt, resulting in elongation of the V-belt 13. However, in this invention, elongation of the V-belt is prevented by the biais mechanism 25, because the tension in the V-belt 13 is governed by the biais mechanism 25. Therefore, since the pitch line in the driven pulley 8 is not moved radially outward as observed in conventional device, decrease of the rotational speed of the output shaft 2 can be suppressed effectively.

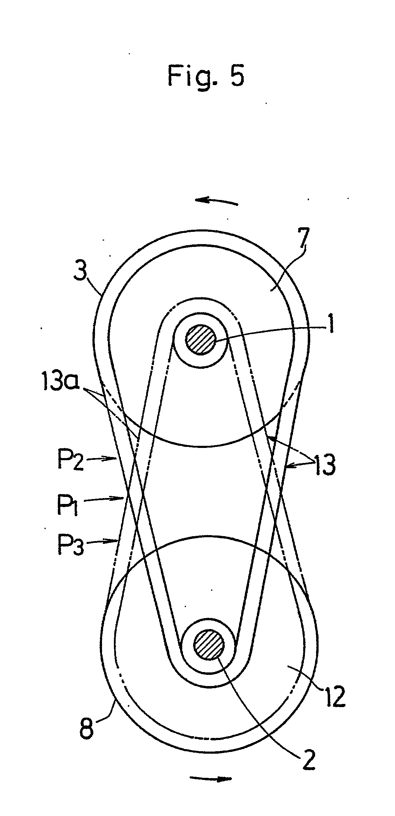

Furthermore, the position of the biais mechanism 25 placed between both pulleys 3 and 8 can be selected, for example, among three of the first position (P1) to the third position (P3), as shown in Fig.5. The first one (P1) is located substantially midway between pulleys 3 and 8 where the radial movement of the V-belt 13 is least during shifts of the transmission ratio of the input shaft 1 to the output shaft 2. The second position (P2) and the third position (P3) are respectively offset towards the input shaft 1 and towards the output shaft 2 from said first position (P1).

When the biais mechanism 25 is placed at the first position (P1), the tension of the V-belt 13 can be always kept nearly constant. In the case placed at the second position (P2), the force for biasing the tension roller 26 to the V-belt 13 is raised to increase the tension of the V-belt when the transmission ratio is shifted into the high mode (a location of the V-belt at that time is shown in full lines), and the bias force to the V-belt is lowered to decrease the tension of the V-belt 13 at the low mode. On the other hand, in the case placed at the third position (P3), the reverse characteristic of tension variation occurs when mechanism 25 is placed at the second position (P2). Therefore, when the condition for using the speed-shifting device (A) or the transmission ratio of high speed is changed, the tension of the V-belt 13 can be quickly adjusted at the same time by moving the bias mechanism 25 to its optimum position in dependence on the change.

Other embodiments in this invention are shown in Figures 6 to 8. Detailed descriptions of these embodiments are omitted since the corresponding elements to those in the first embodiment are indicated by the same reference numerals.

In the embodiment as shown in Fig. 6, a bias mechanism for imparting tension to the V-belt 13 is placed inside of the pitch line. The same effects as in the abovementioned embodiment are obtained with this embodiment.

In the embodiment shown in Fig. 7, the bias mechanism 25" is movably arranged to lower the tension of the V-belt 13 by including a retaining member 30' mounted on the end of a pivoted arm 31. As a result, the bias mechanism 25" also serves as a clutch mechanism to stop the power transmission between both shafts 1 and 2 in correspondence with a lowering of the tension of the V-belt 13.

In the case of this embodiment, the power transmission between both shafts 1 and 2 can be interrupted by rotating the arm 31 as indicated in chain lines, in addition to the same working effect as obtained in the first embodiment. Further, since starting and stopping of power transmission can be done independently of the transmission ratio fof the input shaft 1 to the output shaft 2, interruption of the power transmission can be done immediately whenever required and the transmission ratio when power transmission is re-started can be kept equal to the previous one before interrupted. In consequence, there is an advantage that the previous transmission ratio can be obtained quickly, when power transmission is re-started in this way, which can not be obtained in a clutch mechanism which involves interruption of power transmission by moving the movable sideplate of the pulley to the remote position from the fixed sideplate.

Fig. 8 shows an embodiment wherin the arrangement of the cam mechanisms 14 and 15 is altered. In this embodiment, in each of cam mechanisms 14' and 15', a roller follower 20' a which rotates keeping contact with the inclined cam face 17b at the end of the cylindrical cam part 17a in the driven cam 17 is mounted at a predetermined peripheral position replacing the cam part 20a in the abovementioned example.

In this arrangement, while changing speed by shifting operation with the shifting lever 23, when the driving cam 20' is turned, the roller follower 20' a is urged to the cam face 17b, rotating along the inclined cam face 17b formed at the end of the cylindrical cam part 17a in the driven cam 17. As a result, a frictional resistance between the driving cam 20' and driven cam 17' is very much reduced, so there is an advantage that the handling force for shifting speed can be reduced In addition, in this case, the roller follower 20' a can be replaced by any type of cam follower, roller bearing, or the like. Also, the roller follower 20' a may be provided in the driven cam 17 instead of the driving cam 20'.

Though, in each abovementioned embodiment, the movable sldeplates 6 and 11 of pulleys 3 and 8 on shafts 1 and 2 are moved axially by the ca- mechanis 14 and 15 composed of the driving cams 20 and the driven cams 17 the ovable sideplates 6 and 11 can be oved by other mechanis, for example, composed of a screw members axially moved by a relative turns of the input shaft 1 and output shaft 2.

According to a speed-shifting device in this invention a bias force of a spring for giving a tension to the belt member can be reduced by giving the tension vith a bias mechanism put betveen both pulleys obtaining a lovering of the costs and improvement of assembling work. Also shifting speed can be done smoothly vith the slight handling force by opening and closing of both grooves in pulleys inversely synchronized vith each other ~oreover there is a superb effect for practical use that decrease of rotational speed of output shaft is prevented by suppressing an elongation of the belt meober vith a bias mechanisu in the primary stage of the load mode.

Furthermore, when abovementioned bias mechanism is arranged to be movable to decrease the tension of the belt meober and served as a clutch mechanism interrupting the pover transmission betveen both transmission shafts by the decrease of the tension of the belt member the transmission of the rotation of both transmission shafts can be interrupted and recovering can be done vith the exact transmission ratio vhen interrupted in and transmission ratio.

## Claims

1. A speed-shifting device including a pair of parallel transmission shafts (1, 2), a driving pulley (3) and a driven pulley (8) respectively mounted on said shafts each of which pulleys comprises a fixed sideplate (5, 10) secured to the shaft and a movable sideplate (6, 11) mounted for rotation with and axial sliding movement relative to the shaft, said fixed and movable sideplates on each shaft forming a V-shaped groove (12) between them, a belt member (13) extending between said driving and driven pulleys and engaging in said V-shaped grooves thereof, whereby the transmission ratio between transmission shafts can be changed by varying the effective radius of the engagement of each said pulley with said belt member by moving each movable sideplate axially towards and away from the facing fixed sideplate, a speed-shifting mechanism (24) adapted to vary the transmission ratio between said transmission shafts by operating said movable sideplates (6, 11) of said driving and driven pulleys respectively, so as to move said movable sideplate away from said fixed sideplate on one transmission shaft when said movable sideplate on the other transmission shaft is moved towards the fixed sideplate, the movements of said movable side-plates being synchronized with each other, a belt tension roller (26) is arranged between said driving and said driven pulley, characterized in that the speed-shifting mechanism comprises a first cam mechanism (14) adapted to move axially said movable sideplate of said driving pulley towards and away from said fixed sideplate, a second cam mechanism (15) adapted to move axially said movable sideplate of said driven pulley towards and away from said fixed sideplate, and a connecting mechanism (22) connecting said first cam mechanism with said second cam mechanism, adapted for inversely synchronizing said cam mechanisms so that when said movable sideplate of one pulley moves axially to said fixed sideplate the movable sideplate of the other pulley simultaneously moves axially from said fixed sideplate, whereby said tension roller (26) bias mechanism (25) disposed between said driving pulley and said driven pulley is arranged for engagement with a slack part of said belt member to increase the tension of the belt member, and a spring (29) is provided for biasing said tension roller towards said slack part of the belt member.

2. A speed-shifting device as claimed in claim 1, wherein said connecting mechanism includes wires adapted for connecting said first cam mechanism with said second cam mechanism.

3. A speed-shifting device as claimed in claim 1, wherein said connecting mechanism includes linkages adapted for connecting said first cam mechanism with said second cam mechanism.

4. A speed-shifting device as claimed in claim 1, wherein said cam mechanisms are composed of a driving cam (20) and a driven cam (17) contacted therewith.

5. A speed-shifting device as claimed in claim 1, wherein said cam mechanisms are composed of a cam (17) and a roller follower (20'a) contacted therewith.

6. A speed-shifting device as claimed in any one of claims 1 to 5, wherein said bias mechanism is adapted for engagement with the outer circumferential face of the slack part of said belt member (13).

7. A speed-shifting device as claimed in any one of claims 1 to 5, wherein said bias mechanism is adapted for engagement with the inner circumferential face of the slack part of said belt member (13).

8. A speed-shifting device as claimed in any one of claims 1 to 7, wherein said bias mechanism (25) is placed substantially midway between said driving pulley and said driven pulley.

9. A speed-shifting device as claimed in any one of claims 1 to 7, wherein said bias mechanism (25) is disposed in a position offset to one side of the midway position between said transmission shafts.

10. A speed-shifting device as claimed in any one of claims 1 to 9, wherein said bias mechanism is arranged to be movable to reduce the tension of said belt member and serves as a clutch mechanism for interrupting the power transmission between said transmission shafts by reduction of the tension of said belt member.

11. The speed-shifting device as claimed in claim 10, wherein said bias mechanism is provided with a pivot arm (31) having said tension roller (26) mounted at the end thereof for engagement with the slack part of said belt member, said arm being pivotable to move the tension roller into and out of engagement with said slack part of the belt.

**Patentansprüche**

1. Wechselgetriebe, beinhaltend ein Paar paralleler Transmissionswellen (1, 2), eine Antriebsscheibe (3) und eine Abtriebsscheibe (8), die jeweils auf den Wellen montiert sind, wobei jede der Scheiben eine fixierte, auf der Welle befestigte Seitenscheibe (5, 10) und eine bewegbare Seitenscheibe (6, 11) aufweist, die auf der Welle drehschlüssig und axial verschiebbar angeordnet ist, wobei die fixierten und bewegbaren Seitenscheiben auf jeder Welle zwischen sich eine Keilnut (12) bilden, weiters einen sich zwischen der Antriebs- und der Abtriebsscheibe erstreckenden und in deren Keilnuten eingreifenden Riemen (13), wobei das Übersetzungsverhältnis zwischen den Transmissionswellen durch Ändern des wirksamen Angriffsradius jeder der Scheiben an dem Riemen durch axiales Bewegen jeder bewegbaren Seitenscheibe zu oder weg von der zugekehrten fixierten Seitenscheibe verändert wird, weiters eine Geschwindigkeits-Wechselvorrichtung (24), die zum Ändern des Übersetzungsverhältnisses zwischen den Transmissionswellen durch Steuern der bewegbaren Seitenscheiben (6, 11) der Antriebs- und der Abtriebsscheibe ausgebildet ist, derart, daß auf einer Transmissionswelle die bewegbare Seitenscheibe von der fixierten Seitenscheibe wegbewegt wird, wenn auf der anderen Transmissionswelle die bewegbare Seitenscheibe zur fixierten Seitenscheibe hin bewegt wird, wobei die Bewegungen der bewegbaren Seitenscheiben miteinander synchronisiert sind, und eine zwischen der genannten Antriebs- und der genannten Abtriebsscheibe angeordnete Riemenspannrolle (26) vorgesehen ist, dadurch gekennzeichnet, daß die Geschwindigkeits-Wechselvorrichtung eine erste Steuerkurven-Vorrichtung (14), die zum axialen Bewegen der bewegbaren Seitenscheibe der Antriebsscheibe zu und weg von der fixierten Seitenscheibe ausgebildet ist, eine zweite Steuerkurven-Vorrichtung (15), die zum axialen Bewegen der bewegbaren Seitenscheibe der Abtriebsscheibe zu und weg von der fixierten Seitenscheibe ausgebildet ist, und eine Verbindungs-Vorrichtung (22) aufweist, die die erste Steuerkurven-Vorrichtung mit der zweiten Steuerkurven-Vorrichtung verbindet und zum umgekehrten Synchronisieren der Steuerkurven-Vorrichtungen ausgebildet ist, so daß, wenn die bewegbare Seitenscheibe einer Scheibe sich axial zur fixierten Seitenscheibe bewegt, sich gleichzeitig die bewegbare Seitenscheibe der anderen Scheibe axial weg von der fixierten Seitenscheibe bewegt, wobei die Riemenspann rolle (26) als Spann-Vorrichtung (25) zwischen der Antriebsscheibe und der Abtriebsscheibe zum Angriff an einem schlaffen Trum des genannten Riemens angreift, um die Spannung des Riemens zu erhöhen, und eine Feder (29) zum Vorspannen der Riemenspannrolle (26) gegen das schlaffe Trum des Riemens vorgesehen ist.

2. Wechselgetriebe nach Anspruch 1, wobei die Verbindungs-Vorrichtung Drähte beinhaltet, die zum Verbinden der ersten Steuerkurven-Vorrichtung mit der zweiten Steuerkurven-Vorrichtung ausgebildet sind.

3. Wechselgetriebe nach Anspruch 1, wobei die Verbindungs-Vorrichtung Verbindungsglieder beinhaltet, die zum Verbinden der ersten Steuerkurven-Vorrichtung mit der zweiten Steuerkurven-Vorrichtung ausgebildet sind.

4. Wechselgetriebe nach Anspruch 1, wobei die Steuerkurven-Vorrichtungen aus einem Antriebsnocken (20) und einem damit in Berührung stehenden Abtriebsnocken (17) bestehen.

5. Wechselgetriebe nach Anspruch 1, wobei die Steuerkurven-Vorrichtungen aus einem Nocken (17) und einem damit in Berührung stehenden Rollen-Nockenfolger (20a) bestehen.

6. Wechselgetriebe nach einem der Ansprüche 1 bis 5, wobei die Spann-Vorrichtung zum Angriff an der äußeren Umfangsfläche des schlaffen Trums des Riemens (13) ausgebildet ist.

7. Wechselgetriebe nach einem der Ansprüche 1 bis 5, wobei die Spann-Vorrichtung zum Angriff an der inneren Umfangsfläche des schlaffen Trums des Riemens (13) ausgebildet ist.

8. Wechselgetriebe nach einem der Ansprüche 1 bis 7, wobei die Spann-Vorrichtung (25) im wesentlichen auf halbem Wege zwischen der Antriebsscheibe und der Abtriebsscheibe angebracht ist.

9. Wechselgetriebe nach einem der Ansprüche 1 bis 7, wobei die Spann-Vorrichtung (25) in einer zur mittigen Stellung nach einer Seite versetzten Stellung zwischen den Transmissionswellen angeordnet ist.

10. Wechselgetriebe nach einem der Ansprüche 1 bis 9, wobei die Spann-Vorrichtung zur Verringerung der Spannung des Riemens bewegbar ausgebildet ist und als Kupplungs-Vorrichtung zur Unterbrechung der Kraftübertragung zwischen den Transmissionswellen durch Verringerung der Spannung des Riemens dient.

11. Wechselgetriebe nach Anspruch 10, wobei die Spann-Vorrichtung mit einem Schwenkarm (31) versehen ist, an dessen Ende die Spannrolle (26) zum Angriff an dem schlaffen Trum des Riemens befestigt ist, wobei der Arm schwenkbar ist, um die Spannrolle in und auBer Angriff an dem schlaffen Trum des Riemens zu bewegen.

## Revendications

1. Dispositif de changement de vitesse du type comprenant une paire d'arbres de transmission (1, 2), une poulie d'entraînement (3) et une poulie entraînée (8) montées respectivement sur lesdits arbres, chacune de ces poulies comprenant un plateau latéral fixe (5, 10) solidaire de l'arbre et un plateau latéral mobile (6, 11) montée en rotation avec l'arbre et pouvant se déplacer parallèlement à l'axe de l'arbre, lesdits plateaux latéraux fixes et mobiles de chaque poulie formant entre elles une gorge en forme de V (12), une courroie (13) s'étendant entre lesdites poulies d'entrainement et entraînée et coopérant avec lesdites gorges en forme de V, de telle sorte que le ratio de transmission entre les arbres de transmission puisse être changé en faisant varier le rayon effectif de coopération de chaque dite poulie avec ladite courroie en déplaçant axialement chaque plateau mobile en le rapprochant et en l'éloignant du plateau latéral fixe lui faisant face, un mécanisme de changement de vitesse (24) destiné à faire varier le ratio de transmission entre lesdits arbres de transmission en actionnant lesdits plateaux latéraux mobiles (6, 11) desdites poulies d'entrainement et entraînée respectivement, de façon à écarter ledit plateau latéral mobile dudit plateau latéral fixe sur un axe de transmission pendant que ledit plateau latéral mobile sur l'autre axe de transmission est rapproché du plateau latéral fixe, les mouvements desdits plateaux latéraux mobiles étant synchronisés entre eux, un rouleau de tension de la courroie (26) est placé entre ladite poulie d'entrainement et ladite poulie entraînée, caractérisé en ce que le mécanisme de changement de vitesse comprend un premier mécanisme à came (14) adapté pour déplacer axialement ledit plateau latéral mobile de ladite poulie d'entrainement en le rapprochant et en l'éloignant dudit plateau latéral fixe, un deuxième mécanisme à came (15) adapté pour déplacer axialement ledit plateau latéral mobile de ladite poulie entraînée en l'éloignant et en le rapprochant dudit plateau fixe, et un mécanisme de liaison (22) liant ledit premier mécanisme à came et ledit second mécanisme à came, adapté pour synchroniser inversement lesdits mécanismes à came de telle sorte que lorsque ledit plateau latéral mobile d'une poulie se déplace axialement en se rapprochant dudit plateau latéral fixe, simultanément le plateau latéral mobile de l'autre poulie se déplace axialement en s'éloignant dudit plateau latéral fixe, tandis que ledit rouleau de tension (26) du mécanisme de réglage de la tension (25) disposé entre ladite poulie d'entrainement et ladite poulie entraînée est monté pour coopérer avec la partie lâche de ladite courroie pour augmenter la tensivn de la courroie, et un ressort (29) est prévu pour appliquer ledit rouleau de tension contre ladite partie lâche de la courroie.

2. Dispositif de changement de vitesse suivant la revendication 1, dans lequel lesdits mécanismes de liaison comprennent des câbles adaptés pour relier ledit premier mécanisme à cames audit deuxième mécanisme à cames.

3. Dispositif de changement de vitesse suivant la revendication 1, dans lequel ledit mécanisme de liaison comprend des liaisons adaptées pour relier ledit premier mécanisme à cames audit second mécanisme a came.

4. Dispositif de changement de vitesse suivant la revendication 1, dans lequel lesdits mécanis nes à came sont composés d'une came menante (20) et d'une came menée (17) en contact l'une avec l'autre.

5. Dispositif de changement de vitesse suivant la revendication 1, dans lequel lesdits mécanismes à came sont composés d'une came (17) et d'un rouleau suiveur (20'a) en contact l'une avec l'autre.

6. Dispositif de changement de vitesse suivant l'une quelconque des revendications 1 à 5, dans lequel ledit mécanisme de réglage de la tension est adapté pour être engagé sur la face circonférentielle extérieure de la partie lâche de ladite courroie (13).

7. Dispositif de changement de vitesse suivant l'une quelconque des revendications 1 à 5, dans lequel ledit mécanisme de réglage de la tension est adapté pour être engagé sur la face circonférentielle intérieure de la partie lâche de ladite courroie (13).

8. Dispositif de changement de vitesse suivant l'une quelconque des revendications 1 à 7, dans lequel ledit mécanisme de réglage de la tension (25) est placé substantiellement à mi chemin entre ladite poulie d'entraînement et ladite poulie entraînée.

9. Dispositif de changement de vitesse suivant l'une quelconque des revendications 1 à 7, dans ledit mécanisme de réglage de la tension (25) est disposé dans une position décalée d'un côté de la position à mi chemin entre lesdites poulies de transmission.

10. Dispositif de changement de vitesse suivant l'une quelconque des revendications 1 à 9, dans lequel ledit mécanisme de réglage de la tension est arrangé pour être actionné pour réduire la tension de ladite courroie et servir comme mécanisme d'embrayage pour interrompre la transmission de puissance entre lesdites poulies de transmission par réduction de la tension de ladite courroie.

11. Dispositif de changement de vitesse selon la revendication 10, dans lequel ledit mécanisme de réglage de la tension est constitué d'un bras articulé (31) ayant ledit rouleau de tension (26) à l'extrêmité prévue pour être engagée avec la partie lâche de ladite courroie, ledit bras étant pivotable pour déplacer le rouleau de tension entre une position dans laquelle il est engagé avec ladite partie lâche de la courroie et une position dans laquelle il n'est pas engagé avec ladite partie lâche de la courroie.

# Fig. 1

Fig. 2

# Fig. 3

Fig. 4

# Fig. 5

# Fig. 6

## Fig. 7

Fig. 8

## Fig. 9